Europäisches Patentamt

European Patent Office

Office européen des brevets

(19)

(11) **EP 0 564 000 B1**

(12) **EUROPEAN PATENT SPECIFICATION**

(45) Date of publication and mention
of the grant of the patent:
**29.01.1997 Bulletin 1997/05**

(51) Int. Cl.$^6$: **B01D 53/26**, G01N 31/22

(21) Application number: 93106256.6

(22) Date of filing: **24.07.1989**

(54) **Method and apparatus for detecting moisture present in atmosphere gas**

Methode und Apparat zur Feststellung von Feuchtigkeit in der Gasatmosphäre

Méthode et appareil pour détecter l'humidité présente dans un gaz atmosphérique

(84) Designated Contracting States:
**CH DE FR GB LI**

(30) Priority: **25.07.1988 JP 183672/88**
**02.08.1988 JP 192037/88**
**02.08.1988 JP 192038/88**

(43) Date of publication of application:
**06.10.1993 Bulletin 1993/40**

(62) Application number of the earlier application in
accordance with Art. 76 EPC: **89113587.3**

(73) Proprietors:
• **Ishikawajima-Harima Heavy Industries Co., Ltd.**
**Tokyo 100 (JP)**
• **IHI MASTER METAL LTD.**
**Koutoh-ku Tokyo (JP)**

(72) Inventors:
• **Yamaguchi, Toru**
**Sakura-shi, Chiba (JP)**
• **Inazuki, Yukio**
**Sayama-shi, Saitama (JP)**
• **Nakazawa, Hideo**
**Funabashi-shi, Chiba (JP)**

(74) Representative: **Schaumburg, Thoenes & Thurn**
**Postfach 86 07 48**
**81634 München (DE)**

(56) References cited:
**US-A- 4 116 650**

• **JOURNAL OF METALS vol. 39, no. 5, May 1987,**
**WARRENDALE,PA,USA pages 20 - 23 D.**
**T.PETERSON 'Purification of Alkaline Earth**
**Metals'**
• **O.A.NEUMÜLLER 'Römpps Chemie-Lexikon'**
**1979 , STUTTGART,DE**
• **Kirk-Othmer, Encyclopedia of Chemical**
**Technology, third Edition, Volume 3, John Wiley**
**& Sons, New York, 1978, Pages 458, 459, 461**

Remarks:
The file contains technical information submitted
after the application was filed and not included in
this specification

## Description

BACKGROUND OF THE INVENTION

Technical Field

The present invention generally relates to a method of detecting moisture remaining in an atmosphere gas in a trace amount to an extremely low content level in manufacturing high-purity fine particles of reactive metals, the metals being reactive especially in terms of liability to forming hydroxides (the "reactive metals," e.g., metals of IIa, IIIa, IVa and IVb families in the periodical table), as well as to an apparatus for detecting such a trace amount of moisture.

Background Art

In treating reactive metals generally, the practice of providing an inert or vacuum environment to which the metals are exposed is known in the art.

In connection with treating reactive metals, there is presently a strong need for manufacturing high-purity fine particles, especially those which are apt to form hydroxides (e.g., the IIa, IIIa, IVa and IVb family metals in the periodical table, hereinafter referred to as "reactive metals") from a sector of advanced materials such as superconducting materials. Here, one technical problem is that an ordinary inert gas atmosphere or vacuum is not good enough for the reactive metals, because they form hydroxides upon reaction with moisture remaining in the environment gas even if the moisture exists in a small amount and the hydroxides give rise to voids or other defects in the product particles, thereby degrading the qualities thereof.

For removing moisture from the atmosphere gas so as to prevent the above defects, the presently common practice is either to use a moisture absorbent such as silica gel, sulfuric acid, sodium hydroxide or anhydrous magnesium perchlorate, or to use a dehumidifying machine of one sort or another. However, these methods are not completely capable of removing the moisture to an extremely low content level (e.g., 10-100 Weight/Volume part per billion (W/V ppb)) that satisfies us in making high-purity fine particles of reactive metals.

With the methods using a moisture absorbent, moreover, there is a problem of the absorbent releasing the moisture it has captured once, if the atmospheric temperature rises or the pressure drops.

EP-A-0 356 698 describes a method and an apparatus for better cleaning said atmosphere gases.

Even if such a low moisture content has been attained, furthermore, there exists no method today to easily and qualitatively detect moisture present in such trace amount. That is to say, today's general practice is to sample out the atmosphere gas and determine the moisture content by letting the absorber (usually calcium chloride) absorb its moisture away and knowing the absorber's weight difference, i.e., the so-called absorbed mass method; but this method is inapplicable to certain usages because of sheer lack of sensitivity.

Furthermore, this method is inapplicable where manufacturing of the reactive metals is always conducted in a small-size hermetically enclosed vessel, and the absorbed mass method cannot be practiced in such a confined space.

"Kirk-Othmer Encyclopedia of Chemical Technology, third Edition, 1978, Volume 3, Pages 458, 459, 462" as well as "O.A. Neumüller 'Römpps Chemie-Lexikon', 1979, Stuttgart (DE), Page 365" both teach that the (largest) use for barium powder is as a getter to remove the last traces of gases from vacuum and television picture tubes.

OBJECTS OF THE INVENTION

The problem to be solved by this invention is to provide a method of detecting the moisture in the atmosphere gas as described earlier in a simple and easy manner (the "trace moisture detection method") and an apparatus therefor (the "trace moisture detector").

The invention solves this problem by the features as specified in claims 1 and 2. Claim 3 descibes a preferred embodiment.

In summary, the present invention provides a trace moisture detection method, and the trace moisture detector used therefor.

According to the trace moisture detection method, the moisture existing in an atmosphere of an inert gas in a trace amount can be detected by letting the atmosphere gas come in contact with black barium powder since the change of the black barium powder in color, i.e., bleaching thereof, indicates the presence of the moisture. This phenomenon occurs when barium hydroxide, which is white in color, is formed in a chemical reaction,

$$2 \cdot H_2O + Ba \rightarrow Ba(OH)_2 + H_2,$$

wherein the black barium powders work as a moisture indicator when, and only when, moisture is present in the atmosphere gas.

The apparatus for practicing this method, i.e. the trace moisture detector, comprises a transparent cylinder with black barium powder placed therein, a pair of gas permeable members whose duty is not only to hold the barium powders in the cylinder but also to allow the atmosphere gas to pass there through to contact the barium powders, a pair of covers detachably provided at either end of the cylinder, and a seal that hermetically seals each cover and holds it closed so as to protect the black barium powder from moisture in the ambient air while the detector is in disuse.

When the covers are removed in the atmosphere gas concerned, the black barium powder bleaches when, and only when, there is moisture in the gas as described above, even if the amount of the moisture is in trace levels; this color change can be observed reliably and easily from the outside through the transparent cylinder wall of the detector body.

It will be understood that with the trace moisture detector, the black barium powder that acts as the indicator is the only consumable item, all other components bearing up under an indefinite number of repetitive service cycles, and that owing to the hermetic sealing of the cylinder, the trace moisture detector is able to withstand an indefinitely long shelf storage or is free to be transported about in an ambient atmosphere.

BRIEF DESCRIPTION OF THE DRAWINGS

The invention will now be described with reference to the accompanying drawings in which:

Figure 1 is a diagram showing a side view of one embodiment of a trace moisture detector of the present invention; and

Figure 2 is a diagram showing the manner of using the trace moisture detector of Figure 1.

DESCRIPTION OF THE PREFERRED EMBODIMENTS

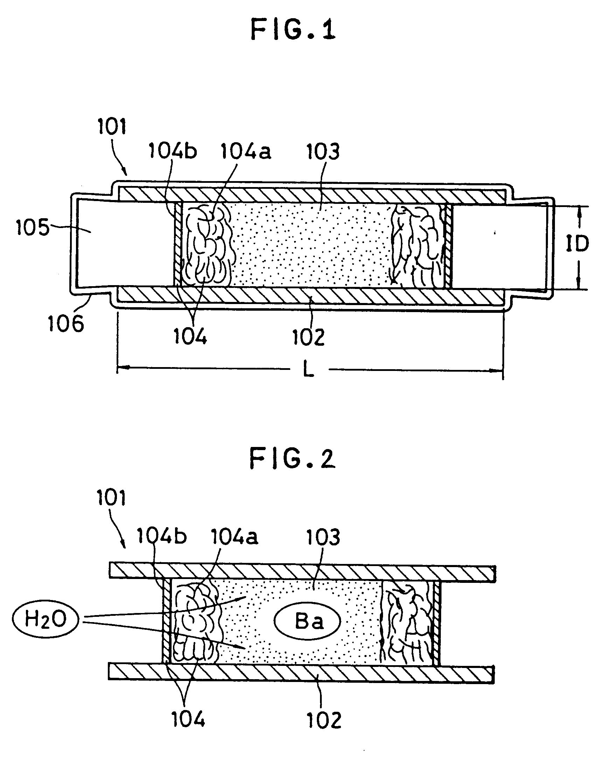

As for the method of examining the result of cleaning the atmosphere gas of moisture, as achieved for instance by means of the Na generator as described in EP-A-0 356 698, (i.e., the "trace moisture detection method") and the apparatus to be used therefor (i.e., the "trace moisture detector"), firstly, we schematically illustrate the trace moisture detector 101 in Figure 1. The main body of a trace moisture detector 101 is a transparent cylinder 102 made, for example, of a glass tube 15 mm in inner diameter ID and 50 mm in length L. Within the cylinder 102, there is placed, in an atmosphere properly freed of moisture, an amount of black barium powder (metallic Ba) 103 of a grain size of between 10 and 20 micrometers. Although metallic Ba is colorless, it turns black when it is ground to this size level, because the total reflectivity of visible light is degraded upon pulverization. The detector 101 is preferably manufactured in an atmosphere of low moisture.

The black barium powder 103 is held in position within the cylinder 102 by a pair of gas permeable plugs 104, which function not only to hold the black barium powder in position, but to let the atmosphere gas under examination enter the cylinder 102. Here, we have selected a duplex structure for the plug 104 with glass wool 104a in the inside and a copper mesh 104b at the outside to support the glass wool 104a; the glass wool 104a alone is not strong enough to keep the barium powder in its position, and the copper mesh 104b alone is incapable of holding back the barium powder of such fine grain size.

The ends of the cylinder 102 are closed by plugs 105, the gaps between the plugs 105 and the cylinder 102 being sealed with a sealant 106. The plugs 105 or other means are required when the detector 101 is not used in order to protect the barium powder. Here, a silicone rubber plug is employed as the plug 105. A sol masking resin is employed as the sealant 106 to entirely cover the cylinder 102 together with its two plugs 105 in position for the purpose of making it possible to carry the trace moisture detector 101 around or shelf store it for an indefinitely long period of time.

The manner of practicing the trace moisture detection method using the trace moisture detector 101 will now be described.

First, we place the trace moisture detector 101 (called simply "detector" hereafter) in the manufacturing vessel (not shown), then evacuate the manufacturing vessel, fill it with an inert gas, and remove the moisture in the atmosphere gas a described earlier. It is then that we break the seal 106 and remove the plugs 105, whereupon the atmosphere gas intrudes into the cylinder 102 through the gas permeable members 104 to make contact with the black barium powder 103. When, and only when, the atmosphere gas contains moisture even in a trace amount, the metallic Ba that constitutes the black barium powder 103 reacts with the moisture in a reaction,

$$2 \cdot H_2O + Ba \rightarrow Ba(OH)_2 + H_2,$$

producing barium hydroxide, which is white in color, thereby bleaching the black barium powder 103, or letting it work as an indicator of the presence of moisture in the atmosphere gas concerned.

Here, even tough the trace moisture detection method is qualitative in nature, some quasi-quantitative determination of the moisture is yet possible by the degree and rapidity of color change. Therefore, the following criteria is often good enough for the purpose set forth: black (no change in color) = no moisture; stable gray (slight change) = presence of a trace amount of moisture; and white (substantial change) = presence of a considerable amount of moisture. If it is desired that the atmosphere gas be cleaned of moisture to an extremely low content level, the gas cleaning operation described earlier can be repeated.

Having described and discussed the manners of using the trace moisture detector 101, the following features are to be particularly appreciated: first, the sensitivity in detection is very high because Ba gives rise to the clearest visible color change among the alkali metals (Ia family), and alkaline earth metals (IIa family) that are known to be sensitive in reaction with water and bleach themselves by forming white hydroxides; second, the detector 101 can store the black barium powder unchanged in color since the barium is contained in the cylinder 102 which is properly sealed with the plugs 105 and the sealant 106; third, it is small enough to fit in almost any manufacturing vessel; and fourth, the black barium powder suited for the present invention can be obtained in a manner disclosed in Japanese Patent Application No. 63-210620 filed August 26, 1988, entitled "Method of Making High Purity Fine Particles of Reactive Metals," the entire disclosure of which is incorporated herein by reference.

**Claims**

1. A method for detecting moisture present in an extremely low content level in an atmosphere gas, **characterized** in that the method comprises the steps of:

   (A) letting the atmosphere gas come into contact with black barium powder; and

   (B) detecting the presence of moisture in the atmosphere gas through the change in color of the black barium powder.

2. An apparatus for detecting moisture present in an extremely low level in an atmosphere gas, **characterized** in that the apparatus comprises:

   a transparent cylinder (102) having openings respectively at both ends thereof;
   a predetermined amount of black barium powder (103) placed in the cylinder (102); and
   a pair of gas permeable members (104) respectively provided at both ends of the cylinder (102) for holding the black barium powder (103) within the cylinder (102) and for allowing the atmosphere gas to pass therethrough when the atmosphere gas is supplied to the cylinder (102), so as to cause the atmosphere gas to contact the black barium powder (103) within the cylinder (102).

3. An apparatus as defined in claim 2, **characterized** in that the apparatus further comprises:

   a pair of plugs (105) respectively provided at both ends of the cylinder (102) so as to close the ends of the cylinder (102) against undesired intrusion of ambient atmosphere during disuse; and
   a sealant (106) for sealing gaps between the plugs (105) and the cylinder (102).

**Patentansprüche**

1. Verfahren zum Erfassen von Feuchtigkeit in extrem niedrigem Maß in einem atmosphärischen Gas, dadurch **gekennzeichnet**, daß das verfahren die Schritte umfaßt:

   (A) das atmosphärische Gas mit schwarzem Bariumpulver in Kontakt zu bringen, und

   (B) in dem atmosphärischen Gas vorhandene Feuchtigkeit anhand der Änderung der Farbe des schwarzen Bariumpulvers zu erfassen.

2. Vorrichtung zum Erfassen von Feuchtigkeit in extrem niedrigem Maß in einem atmosphärischen Gas, **gekennzeichnet** durch einen transparenten Zylinder (102) mit Öffnungen an seinen beiden Enden, eine vorbestimmte Menge schwarzen Bariumpulvers (103) im Zylinder (102), und zwei gasdurchlässige Elemente (104), die an den beiden Enden des Zylinders (102) zum Halten des schwarzen Bariumpulvers (103) in dem Zylinder (102) vorgesehen sind und das dem Zylinder (102) zugeführte atmosphärische Gas hindurchlassen, so daß es mit dem schwarzen Bariumpulver (103) im Zylinder (102) in Kontakt kommt.

3. Vorrichtung nach Anspruch 2, **gekennzeichnet** durch zwei Zapfen (105), die jeweils an den beiden Enden des Zylinders (102) vorgesehen sind und diese gegen unerwünschtes Eindringen von Umgebungsgas bei Nichtbenutzen verschließen, und eine Dichtung (106) zum Abdichten von Schlitzen zwischen den Zapfen (105) und dem Zylinder (102).

**Revendications**

1. Procédé pour détecter l'humidité présente dans un gaz atmosphérique à un niveau de teneur extrêmement bas, caractérisé en ce qu'il comprend les étapes consistant à :

   (A) laisser venir le gaz atmosphérique au contact d'une poudre noire de baryum, et
   (B) détecter la présence d' humidité dans le gaz atmosphérique par le changement de couleur de la poudre noire de baryum.

2. Appareil de détection de l'humidité présente dans un gaz atmosphérique à un niveau de teneur extrêmement bas, caractérisé en ce qu'il comprend :

   un cylindre transparent (102) présentant des ouvertures respectivement à chacune de ses extrémités;
   une quantité prédéterminée de poudre noire de baryum (103) disposée à l'intérieur du cylindre (102); et
   une paire d' organes (104) perméables aux gaz, respectivement disposés aux deux extrémités du cylindre (102) pour tenir la poudre noire de baryum (103) à l'intérieur du cylindre (102) et permettre au gaz atmosphérique de les traverser lorsque ce gaz atmosphérique est amené au cylindre (102), de manière à mettre le gaz atmosphérique en contact avec la poudre noire de baryum (103) à l'intérieur du cylindre (102).

3. Appareil selon la revendication 2, caractérisé en ce qu'il comprend en outre:

une paire de bouchons (105) respectivement agencés aux deux extrémités du cylindre (102) de manière à fermer les deux extrémités dudit cylindre (102), en s'opposant à toute intrusion indésirable d'atmosphère ambiante lorsque l'appareil est inutilisé; et

un agent d'étanchéité (106) pour assurer l'étanchéité entre les bouchons (105) et le cylindre (102).

# FIG.1

# FIG.2